(19) Europäisches Patentamt
European Patent Office
Office européen des brevets

(11) **EP 4 319 351 A1**

(12) **EUROPEAN PATENT APPLICATION**
published in accordance with Art. 153(4) EPC

(43) Date of publication:
**07.02.2024 Bulletin 2024/06**

(21) Application number: **22853406.1**

(22) Date of filing: **02.08.2022**

(51) International Patent Classification (IPC):
**H04W 68/00** (2009.01)    **H04W 68/02** (2009.01)
**H04W 52/02** (2009.01)    **H04W 76/28** (2018.01)

(52) Cooperative Patent Classification (CPC):
**H04W 52/02; H04W 68/00; H04W 68/02;
H04W 76/28**

(86) International application number:
**PCT/KR2022/011352**

(87) International publication number:
**WO 2023/014029 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 05.08.2021  KR 20210103296
17.11.2021  KR 20210158254

(71) Applicant: **LG Electronics Inc.**
**Yeongdeungpo-gu**
**Seoul 07336 (KR)**

(72) Inventors:
• **HWANG, Seunggye**
**Seoul 06772 (KR)**
• **KIM, Jaehyung**
**Seoul 06772 (KR)**
• **LEE, Youngdae**
**Seoul 06772 (KR)**
• **YANG, Suckchel**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING AND RECEIVING RADIO SIGNAL IN WIRELESS COMMUNICATION SYSTEM**

(57)    A terminal according to the present disclosure receives configuration information for a paging early indication (PEI) including first offset information and second offset information, monitors a first physical downlink control channel (PDCCH) for the PEI on the basis of the configuration information for the PEI, and monitors a second PDCCH for scheduling a paging message on the basis of paging occasions (POs) associated with the PEI, wherein the first offset information may indicate an interval between a paging frame (PF) and a first frame including monitoring opportunities of the first PDCCH, and the second offset information may indicate an interval between a lead monitoring opportunity from among the monitoring opportunities of the first PDCCH and the start of the first frame.

FIG. 12

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, provided herein is a method of receiving a signal by a user equipment (UE) in a wireless communication system. The method may include: receiving configuration information regarding a paging early indication (PEI); monitoring a first physical downlink control channel (PDCCH) for the PEI based on the configuration information regarding the PEI; and monitoring a second PDCCH scheduling a paging message based on paging occasions (POs) associated with the PEI detected as a result of monitoring the first PDCCH. The PEI may be associated with POs of one or more paging frames (PFs) among periodic PFs. The UE may monitor the first PDCCH for the PEI based on first offset information and second offset information included in the configuration information regarding the PEI. The first offset information may indicate a gap between an initial PF among the one or more PFs associated with the PEI and a first frame including monitoring occasions for the first PDCCH. The second offset information may indicate a gap between an initial monitoring occasion among the monitoring occasions for the first PDCCH and a start of the first frame. A granularity of the first offset information may be at a frame level.

The configuration information regarding the PEI may be transmitted through higher layer signaling. The higher layer signaling may be related to a system information block (SIB).

The second offset information may indicate a gap from the start of the first frame to a start of the initial monitoring occasion for the first PDCCH.

The PEI may be associated with POs of a first PF and POs of a second PF among the periodic PFs. The first PF and the second PF may be consecutive PFs.

A plurality of PFs associated with the PEI may be constrained to be consecutive to each other.

A granularity of the second offset information may be different from the granularity of the first offset information.

A granularity of the second offset information may be at a symbol level.

In another aspect of the present disclosure, provided herein is a computer-readable recording medium having recorded thereon a program for executing the signal reception method described above.

In another aspect of the present disclosure, provided herein is a UE configured to perform the signal reception method described above.

In another aspect of the present disclosure, provided herein is a device configured to control the UE that performs the signal reception method described above.

In another aspect of the present disclosure, provided herein is a method of transmitting a signal by a base station in a wireless communication system. The method may include: transmitting configuration information on a PEI; transmitting a first PDCCH for the PEI based on the configuration information regarding the PEI; and transmitting a second PDCCH that schedules a paging message based on POs associated with the PEI transmitted over the first PDCCH. The PEI may be associated with POs of one or more PFs among periodic PFs. The BS may transmit the first PDCCH for the PEI based on first offset information and second offset information included in the configuration information regarding the PEI. The first offset information may indicate a gap between an initial PF among the one or more PFs associated with the PEI and a first frame including monitoring occasions for the first PDCCH. The second offset information may indicate a gap between an initial monitoring occasion among the monitoring occasions for the first PDCCH and a start of the first frame. A granularity of the first offset information may be at a frame level.

In a further aspect of the present disclosure, provided herein is a base station configured to perform the signal transmission method described above.

## ADVANTAGEOUS EFFECTS

According to one embodiment of the present disclosure, the same frame-level offset may be applied to POs associated with the same paging frame in determining the location of a paging early indication (PEI) occasion, thereby achieving signaling overhead reduction.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIG. 8 illustrates a long term evolution (LTE)-based wake-up signal.

FIGS. 9 and 10 respectively illustrate flowcharts of base station (BS) operations and user equipment (UE) operations to which methods proposed in the present disclosure are applicable.

FIG. 11 is a diagram for explaining determination of a paging frame (PF) and a paging occasion (PO) related to New Radio (NR) discontinuous reception (DRX) operation.

FIG. 12 is a diagram for explaining a method of indicating a paging early indication frame (PEI_F) and a paging early indication occasion (PEI_O) according to an embodiment of the present disclosure.

FIG. 13 is a diagram for explaining a method of receiving a signal by a UE according to an embodiment of the present disclosure.

FIG. 14 is a diagram for explaining a method of transmitting a signal by a BS according to an embodiment of the present disclosure.

FIGS. 15 to 18 illustrate an example of a communication system 1 and wireless devices applicable to the present disclosure.

FIG. 19 illustrates an exemplary discontinuous reception (DRX) operation applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- TS 36.211: Physical channels and modulation
- TS 36.212: Multiplexing and channel coding
- TS 36.213: Physical layer procedures
- TS 36.300: Overall description
- TS 36.321: Medium Access Control (MAC)
- TS 36.331: Radio Resource Control (RRC)

3GPP NR

- TS 38.211: Physical channels and modulation
- TS 38.212: Multiplexing and channel coding
- TS 38.213: Physical layer procedures for control
- TS 38.214: Physical layer procedures for data
- TS 38.300: NR and NG-RAN Overall Description
- TS 38.321: Medium Access Control (MAC)
- TS 38.331: Radio Resource Control (RRC) protocol specification
- TS 37.213: Introduction of channel access procedures to unlicensed spectrum for NR-based access

Terms and Abbreviations

- PSS: Primary Synchronization Signal
- SSS: Secondary Synchronization Signal
- CRS: Cell reference signal
- CSI-RS: Channel State Information Reference Signal
- TRS: Tracking Reference Signal
- SS: Search Space
- CSS: Common Search Space
- USS: UE-specific Search Space
- PDCCH: Physical Downlink Control Channel; The PDCCH is used to represent PDCCHs of various structures which may be used for the same purpose in the following description.
- PO: Paging Occasion
- MO: Monitoring Occasion
- BD: Blind Decoding
- DCI: Downlink Control Information

- WUS: Wake Up Signal; The WUS may be used to represent other method signals or channels (e.g., a paging early indication (PEI)), which perform a similar function.
- PEI_F: PEI Frame (Frame for PEI monitoring)
- PEI_O: PEI Occasion (PEI monitoring Occasion (PDCCH monitoring occasion set))
- APEI-MPO method: a method of providing information corresponding to a plurality of POs through one PEI
- mx-pattern: Multiplexing Pattern

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

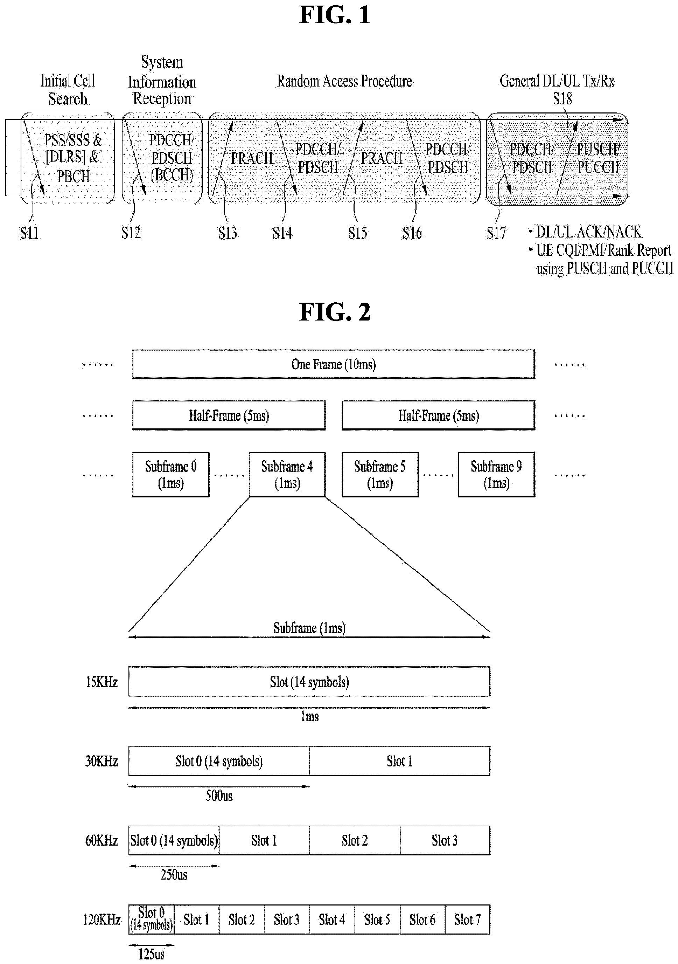

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2$^u$) | N$^{slot}_{symb}$ | N$^{frame,u}_{slot}$ | N$^{subframe,u}_{slot}$ |
|---|---|---|---|
| 240KHz (u=4) | 14 | 160 | 16 |

N$^{slot}_{symb}$: Number of symbols in a slot

* N$^{frame,u}_{slot}$: Number of slots in a frame

* N$^{subframe,u}_{slot}$: Number of slots in a subframe

Table 2 illustrates that the number of symbols per slot, the number of slots per frame, and the number of slots per subframe vary according to the SCS when the extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

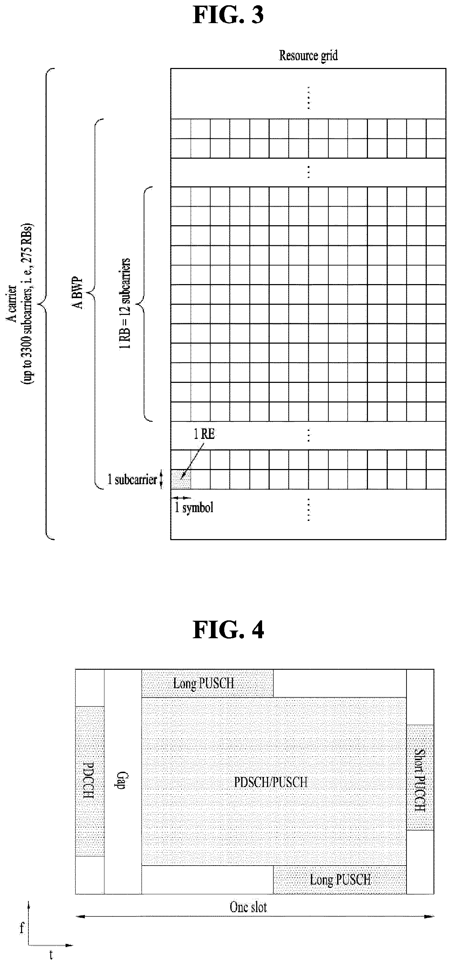

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

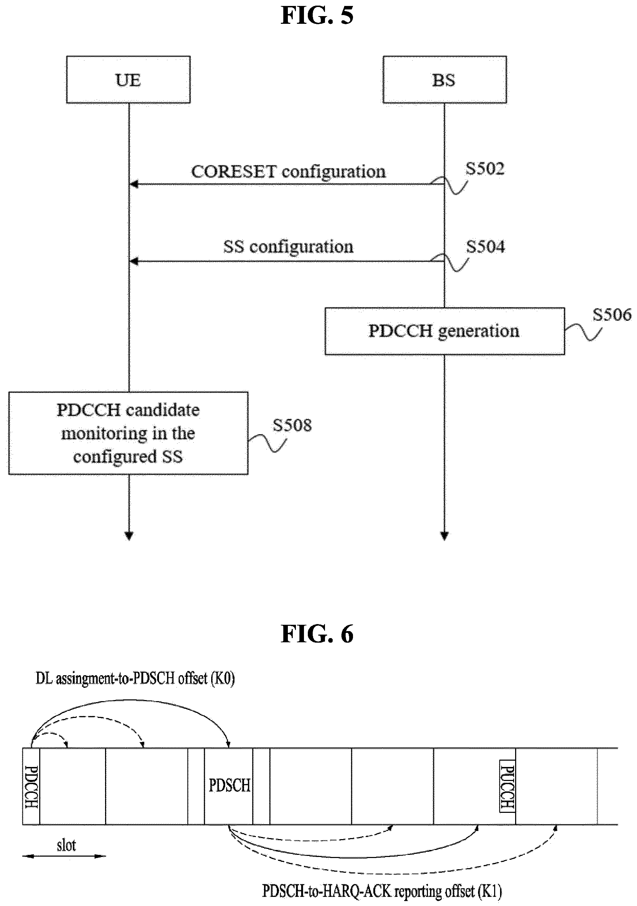

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL= { 1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

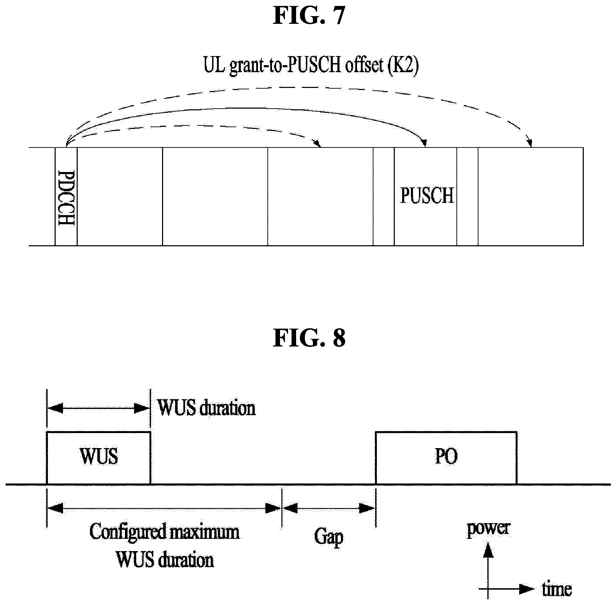

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

**Paging**

The network may (i) access to UEs in RRC IDLE, RRC INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC _INACTIVE states and UEs in the RRC _CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC _INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC _INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each PO signaled by system information, for an SI change indication and a PWS notification. In bandwidth adaptation (BA), the RRC _CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC _INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC _INACTIVE state, the UE transitions to the RRC_IDL state and notifies the NAS of the CN-initiated paging.

A PF and a PO for paging are determined in the following manner:

- An SFN for the PF is determined by:

$$(SFN + PF\_offset) \bmod T = (T \operatorname{div} N)*(UE\_ID \bmod N)$$

- An index i_s indicating the index of the PO is determined by:

$$i\_s = floor(UE\_ID/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC _IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

**WUS (Wake-up signal)/PEI (Paging Early Indication)**

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 8 is a diagram illustrating a WUS in an LTE system. Referring to FIG. 8, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

**Reception of Paging Early Indication**

In communication systems such as LTE and NR, paging is used for the purpose of triggering RRC setup, system information modification, and/or a PWS/ETWS notification. The UE monitors a PDCCH at the position of a PO configured by the BS and, when detecting DCI scrambled with a P-RNTI, performs an operation indicated by the DCI.

In LTE Rel-15 NB-IoT and MTC, the WUS was introduced to save power of a UE. The WUS is a signal indicating whether an actual paging transmission exists in a PO at a specific position. When the BS wants to transmit paging in the PO at the specific position, the BS may transmit the WUS at WUS transmission position(s) associated with the PO. The UE monitors the WUS transmission position(s) associated with the PO at the specific position. Upon detection of the WUS at the WUS transmission position(s), the UE may expect that paging will be transmitted in the PO. When the UE fails to detect the WUS at the WUS transmission position(s), the UE does not expect paging in the PO. This operation may bring the gain of power saving. In LTE Rel-16 NB-IoT and MTC, the UE-group WUS was introduced to increase the power saving gain of the Rel-15 WUS. The UE-group WUS is advantageous in that the unnecessary wake-up probability of a UE may be reduced by using a WUS transmission position and sequence determined based on the UE group ID of the UE.

In Rel-16 NR, a DCI-based power saving scheme has been introduced for the purpose of supporting power saving in a connected mode. To this end, a new DCI format, DCI format 2-6 has been introduced. Specifically, the BS indicates the position of bits to be monitored by the UE in DCI format 2-6, and the UE determines power saving operations in an active time duration based on information on the bits at the corresponding position.

As discussed in Rel-16 NB-IoT and MTC, when a UE in an idle/inactive mode monitors a PO, unnecessary wake-up may occur if paging for other UEs sharing the same PO is transmitted. The unnecessary wake-up may lead to increases in UE power consumption. In current NR, the DCI-based scheme for preventing the connected mode UE from performing unnecessary monitoring has been introduced to achieve the power saving effect as described above. However, the same (or similar) method has not been defined for the idle/inactive mode. In Rel-17 NR, the introduction of a PEI is being discussed as a means to provide information related to paging ahead of a PO for the purpose of UE power saving. As the information related to paging, the following are discussed: a wake-up indication for a UE group (i.e., an entire set of UE_IDs capable of expecting paging on a specific PO), a wake-up indication for a UE subgroup (i.e., a subgroup obtained by subdividing a specific UE group), a short message, and/or an indication on reception of a TRS/CSI-RS, which is assumed and expected by the idle/inactive mode UE.

As one way of determining the location of a PEI, it may be considered that the UE monitors the PEI based on an offset from a corresponding PO. Typically, when the offset between the PEI and PO is small, a paging UE may benefit for the following reasons: the micro-sleep duration is reduced; and the paging latency is minimized. However, UEs except for the paging UE (non-paged UEs) may experience decreases in power-saving gains. On the other hand, when the offset between the PEI and PO is large, non-paged UEs may experience higher power-saving gains. However, there may be disadvantages in that the micro-sleep duration and paging latency are increased unnecessarily. Accordingly, it is necessary to consider a method of allowing the BS to configure the size of the offset between the PEI and PO in consideration of the network conditions and the characteristics of UEs to be served.

When the BS is allowed to adjust the offset between the PEI and PO as described above, the BS needs to adjust the offset at the slot level to achieve PEI location determination with scheduling flexibility similar to that of PO location determination in current NR. To increase the power saving gain of the UE and ensure the number of SSBs (e.g., SSBs required to measure a channel for receiving a paging PDCCH/PDSCH) that the UE needs after PEI acquisition, an offset size of several frames or more may be required. However, if an offset of several tens of milliseconds (ms) is configured with the slot-level granularity, signaling overhead may increase. In addition, considering a case where search space ID #0 is used as one way to determine a paging search space, an offset determination method needs to be designed such that a similar method is applied when configuring a PEI search space.

In consideration of these issues and background, methods of determining a PEI monitoring occasion are proposed. The proposed methods offer advantages by ensuring the slot-level granularity for offsets within tens of ms while also minimizing an increase in signaling overhead. In addition, when the existing CORESET and search space configuration methods are employed, the proposed methods also offer advantages by minimizing an increase in signaling overhead and ensuring coexistence with legacy UEs.

In the following, the present disclosure will be described with a focus on the configuration of PEI transmission and reception. However, the present disclosure is not limited thereto and is applicable to the location of any physical channel/signal for another physical channel/signal.

The present disclosure will be described based on a structure in which a PEI is transmitted and received in a DCI format/PDCCH. However, the present disclosure is not limited thereto and is applicable to a sequence-based PEI. For example, while the term "PDCCH monitoring occasion" is commonly used to refer to a monitoring period for transmitting and receiving a PDCCH, the term "PDCCH monitoring occasion" may mean the location for monitoring a sequence if the sequence-based PEI is used.

The present disclosure will be described in the context of the NR system, but the present disclosure is not limited thereto. That is, the present disclosure is applicable to various wireless communication systems. The methods described below may be combined or implemented independently. Terms, symbols, sequences, etc. described herein may be replaced with other terms, symbols, sequences, etc.

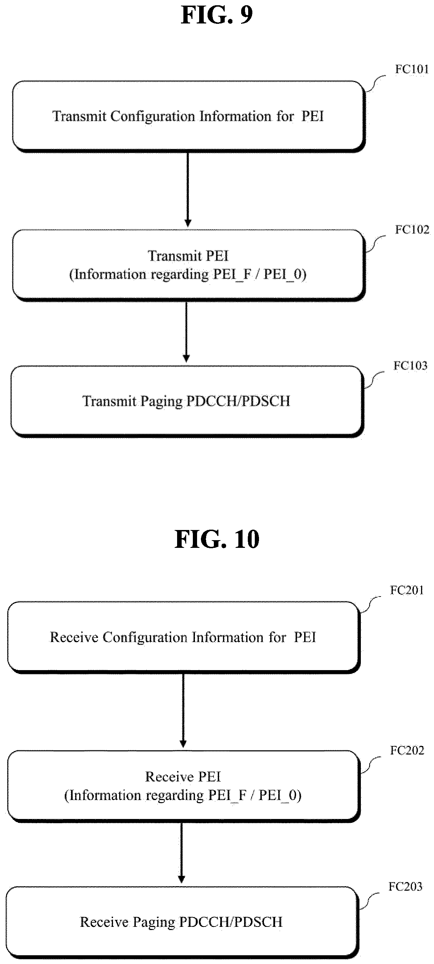

FIG. 9 illustrates BS operations to which the methods proposed in the present disclosure are applicable.

The BS may create configuration information on a PEI and transmit the configuration information (FC101). The configuration information may include configuration information on a PEI monitoring occasion. For example, the configuration information may be transmitted through higher layer signaling (e.g., SIB or RRC signaling).

If the BS desires to transmit information such as a paging message or short message to a specific UE, the BS may transmit the PEI at a location where the specific UE monitors the PEI, for example, at the location defined by a frame (PEI_F) and slots (PEI_O) based on the configuration information provided in step FC101 (FC102).

Thereafter, when the BS has information to transmit such as a paging message or short message, the BS may transmit a PDCCH/PDSCH at the location of a PO associated with the PEI transmitted in step FC102 (FC103).

FIG. 10 illustrates UE operations to which the methods proposed in the present disclosure are applicable.

The UE may receive configuration information on a PEI and apply the configuration information (FC201). In this case, the configuration information may include configuration information on a PEI monitoring occasion. For example, the UE may perform a procedure for obtaining a higher layer signal (e.g., SIB or RRC signaling) to receive the configuration information.

Subsequently, the UE may perform a PEI monitoring operation at a location where the PEI is expected to be received, for example, at a location defined by a frame (PEI_F) and slots (PEI_O) based on the configuration information received in step FC201 (FC202)..

If the UE is instructed to monitor a PO through the PEI in step FC202, the UE may receive a PDCCH/PDSCH at the location of the PO associated with the received PEI (FC203).

Before monitoring a PO at every DRX cycle, the UE may monitor a PEI occasion (hereinafter referred to as the PEI_O) based on configuration information provided by the BS. One PEI_O is a set of one or more PDCCH monitoring occasions and may be composed of a plurality of time slots. In this case, PEI DCI may be transmitted on the PEI_O. One PEI frame (hereinafter referred to as the PEI_F) consists of one radio frame and may include one or multiple PEI_Os or the starting point(s) of PEI_O(s).

In a multi-beam operation scenario, the UE may assume that some information on PDCCH monitoring occasions constituting a PEI_O will be repeated across all transmission beams. In this case, the repeated information may include the following information: UE group/subgroup indication, short message, and/or TRS/CSI-RS indication. However, if the TRS/CSI-RS indication information included in PEI DCI is a beam-specific indication (e.g., an indication targeted to only a TRS/CSI-RS where the same QCL assumption as that of the corresponding PEI transmission is allowed), the corresponding information may not be repeated across all transmission beams but may vary for each transmission beam.

Hereinafter, methods for the UE to determine a PEI_F and a PEI_O to monitor a PEI will be described.

**Proposal 1: Configuration of Frame Offset between PF and PEI F**

To determine the location of a PEI_F, the UE may use information on the location of a paging frame (PF) that the UE needs to monitor and information on an offset from the corresponding PF (hereinafter referred to as *Offset*_F). In this case, the PF may be determined according to the PF definition specified in current NR (e.g., Rel-15/16 NR). Specifically, when DRX is configured, paging may be performed according to 3GPP TS 38.304.

Table 5 is an excerpt from Section 7.1 of 3GPP TS 38.304.

[Table 5]

| |
|---|
| **7.1    Discontinuous Reception for paging** |
| The UE may use Discontinuous Reception (DRX) in RRC_IDLE and RRC_INACTIVE state in order to reduce power consumption. *The UE monitors one paging occasion (PO) per DRX cycle. A PO is a set of PDCCH monitoring occasions and can consist of multiple time slots (e.g. subframe or OFDM symbol) where paging DCI can be sent (TS 38.213 [4]). One Paging Frame (PF) is one Radio Frame and may contain one or multiple PO(s) or starting point of a PO.* |
| In multi-beam operations, the UE assumes that the same paging message and the same Short Message are repeated in all transmitted beams and thus the selection of the beam(s) for the reception of the paging message and Short Message is up to UE implementation. The paging message is same for both RAN initiated paging and CN initiated paging. |
| The UE initiates RRC Connection Resume procedure upon receiving RAN initiated paging. If the UE receives a CN initiated paging in RRC_INACTIVE state, the UE moves to RRC_IDLE and informs NAS. |
| *The PF and PO for paging are determined by the following formulae:* |
| $\quad$ *SFN for the PF is determined by:*<br>$\qquad (SFN + PF\_offset) \bmod T = (T \ div \ N)*(UE\_ID \bmod N)$ |
| $\quad$ *Index (i_s), indicating the index of the PO is determined by:*<br>$\qquad i\_s = floor \ (UE\_ID/N) \bmod Ns$ |
| *T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied).* |
| *N: number of total paging frames in T* |
| *Ns: number of paging occasions for a PF* |
| *PF_offset: offset used for PF determination* |
| *UE_ID: 5G-S-TMSI mod 1024* |

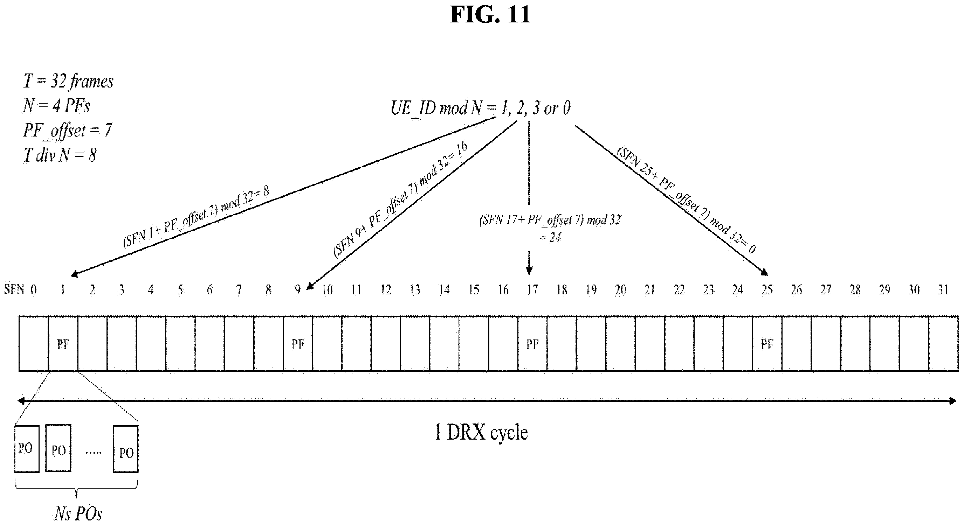

FIG. 11 illustrates exemplary determination of a PF and a PO in current NR DRX (e.g., Rel-15/16 NR DRX).

Referring to Table 5 and FIG. 11 together, it is assumed that DRX cycle length T = 32 frames, number of PFs in DRX cycle N = 4, and PF_offset = 7. Therefore, T / N = 8, and UE_ID mod N has one of the following values: 0, 1, 2, and 3. Specifically, the PF of UEs satisfying UE_ID mod N = 0 is SFN 25, the PF of UEs satisfying UE_ID mod N = 1 is SFN 1, the PF of UEs satisfying UE_ID mod N = 16 is SFN 9, and the PF of UEs satisfying UE ID mod N = 24 is SFN 17. Each UE determines the index (i_s) of a PO that the UE needs to monitor among Ns POs included in one PF according to the formula of floor (UE _ID/N) mod Ns in Table 5.

The UE may obtain *Offset_F*, which represents an offset from the PF of the UE to a PEI_F that the UE needs to monitor from network signaling. For example, *Offset_F* may be provided to the UE in a higher layer signal (e.g., SIB or RRC signal) transmitted by the BS, where the granularity of *Offset_F* may be at the frame level (i.e., 10 ms).

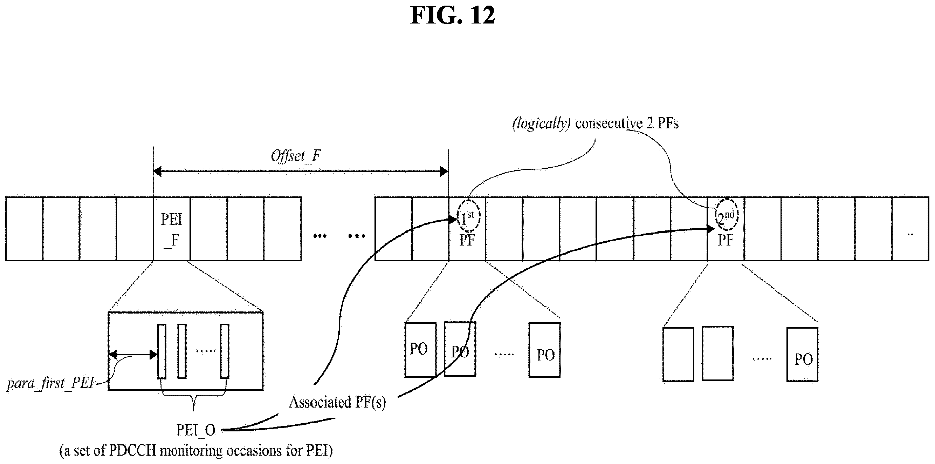

For example, referring to FIG. 12, it is assumed that the UE is configured to monitor POs in either a first PF or a second PF. In this case, the PF and POs may be determined according to Table 5 above. *Offset_F*, which represents an offset between a PEI_F and a specific PF, may be provided to the UE through higher layer signaling. Specifically, *Offset_F* may be an offset that represents the gap from the start of the specific PF to the PEI_F at the frame level. When one PEI is associated with POs of multiple PFs, the initial PF among the multiple PFs may be the specific PF, as in Proposal 3 described later. In the example of FIG. *12, Offset_F* may represent the gap from the start of the first PF to the PEI_F at the frame level. The UE may identify the starting position of the first PF among the first and second PFs associated with the PEI and determine the PEI_F based on the starting position of the first PF and *Offset_F* received through higher layer signaling. The PEI_F includes a set of PDCCH monitoring occasions (PEI_O) that the UE needs to receive the PEI.

If *Offset_F* is not provided (e.g., when there is no network signaling indicating *Offset_F*), the UE may use a default value defined in specifications as *Offset_F*. For example, when it is indicated by the BS that the value of *Offset_*F is three frames and when the PF of the UE is SFN n, the UE may assume that the PEI_*F* is configured at the location of SFN n-3 and thus perform PEI monitoring at the location of the PEI_F.

Meanwhile, the location of the PEI_O for the UE within the PEI _F may be determined by a separate method. Specifically, the proposals disclosed below may be applied to determine the PEI_O within the configured PEI_F.

When the PEI_F is determined based on *Offset_F*, which is the frame-level offset from the PF, as described in Proposal 1, it has the advantage of minimizing signaling overhead for indicating the PEI monitoring location.

**Proposal 2: Determination of PDCCH Monitoring Occasion for PEI within PEI F**

A resource/location where the UE needs to perform PEI monitoring within a PEI_F may be determined based on at least one of the following: (i) higher layer parameter(s) (hereinafter *para_PEI_SS*) for configuring a PEI search space; or (ii) higher layer parameter(s) (hereinafter *para_first_PEI*) for determining the initial PEI monitoring occasion on which PDCCH monitoring for PEI starts in a PEI_O (i.e., PEI_O available for the UE if configured). For example, *para_first_PEI*, which is the parameter indicating the initial PEI monitoring occasion in the PEI_O set in the corresponding PEI_F (e.g., PEI_F based on *Offset_F* described in Proposal 1), may be provided to the UE through higher layer signaling. The parameter *para_first_PEI* may indicate the gap (offset) from the start of the PEI_F to the start of the initial PEI monitoring occasion. The granularity of *para_first_PEI,* which represents the gap (offset) from the start of the PEI_F to the start of the initial PEI monitoring occasion, may be at the symbol level. For example, *para_first_PEI* may indicate the number of symbols between the starting symbol of the PEI_F and the starting symbol of the initial PEI monitoring occasion. For example, referring to FIG. 12, assuming that the UE determines the PEI_F based on the starting position of the first PF and *Offset_F* received through higher layer signaling, and the PEI_F includes a set of PDCCH monitoring occasions (PEI_O) that the UE needs to monitor to receive the PEI, the UE may determine that the PEI_O starts at a location spaced apart by *para_first_PEI* from the start of the PEI_F. (that is, the UE may determine the location of the initial PDCCH MO (monitoring occasion) for the PEI). Here, the start of the PEI_F may be a reference point for applying *para_first_PEI.*

On the other hand, the use of two different granularity offsets based on the combination of *Offset_F* of Proposal 1 and *para_first_PEI* of Proposal 2 may be understood as a trade-off between signaling overhead and scheduling flexibility. If a symbol-level offset is used to indicate the gap between a PEI_F and a PF, a significant number of bits are required, and thus the use of the symbol-level offset is not appropriate in terms of the signaling overload. Thus, it is desirable to indicate the gap between the PEI_F and the PF as a frame-level offset to minimize the signaling overhead. On the other hand, if there is a restriction to indicate a PEI monitoring location only at the frame level, the scheduling flexibility may be compromised. Therefore, it is desirable to indicate the starting position of a PEI_O within the PEI_F with *para_first_PEI*, which corresponds to the symbol-level offset, in terms of the scheduling flexibility.

At least one of *para_PEI_SS* and *para_first_PEI* may be provided to the UE through network signaling or may be determined by parameters for determining a paging search space (e.g., *pagingSearchSpace* and *firstPDCCH-MonitoringOccasionOfPO*).

If the search space ID of *para_PEI_SS* has a value of 0 (i.e., SearchSpaceID = 0), the PDCCH monitoring occasion for a PEI may be determined according to a method of determining the monitoring occasion of a PDCCH scheduling remaining minimum system information (RMSI). To determine the PDCCH monitoring occasion for RMSI, the method defined in current NR (Rel-15/16 NR) may be used, which may be found in 3GPP TS 38.213. When the above method is used and when wake-up indication information provided by one PEI is related to only one PO,

- If only one PO is configured in one PF, only one PEI_O may be configured in one PEI F.
- If two POs are configured in one PF, two PEI_Os may be configured in one PEI_F, the first PEI_O may be configured at the location of the first half frame, and the second PEI_O may be configured at the location of the second half frame. In this case, the order of the PEI_Os in the PEI_F may follow the order in which the corresponding POs appear in the PF.

If the search space ID of *para _PEI_SS* has a value other than 0 (i.e., SearchSpaceID ≠ 0), the PEI_O may be composed of a set of S consecutive PDCCH monitoring occasions, where S may be the number of actually transmitted SSBs configured by SIB1. In addition, a K-th PDCCH monitoring occasion of the PEI_O may be configured to be related to a K-th SSB. In this case, the PDCCH monitoring occasions are sequentially numbered after assigning an index of 0 to the first (initial) PDCCH monitoring occasion in the PEI_F. The corresponding positions may be configured not to overlap with UL symbols. When the above method is used and when wake-up indication information provided by one PEI is related to only one PO,

- If *para_first_PEI* is configured, the starting position of an (i_s+1)-th PDCCH monitoring occasion of the PEI_O within a PF may be configured to be related to an (i_s+1)-th value of *para_first_PEI.*
- If *para_first_PEI* is not configured, the starting position of the (i_s+1)-th PDCCH monitoring occasion of the PEI_O within the PF may be set to an (i_s*S)-th slot.

In this case, i_s is a parameter for representing the index of a PO within a PF, which may be determined by the method described in 3GPP TS 38.304 document (e.g., Table 5).

**Proposal 3: Association between one PEI and multiple POs**

To reduce resource overhead due to PEI transmission, a method of indicating wake-up information for multiple POs through one PEI (hereinafter referred to as the APEI-MPO method) may be used. For example, one PEI may include information on a UE group supposed to be provided with wake-up information for POs. Additionally, the PEI may also include other information in addition to the information on the UE group. Hereinafter, methods of determining a PEI_F and a PEI_O in APEI-MPO will be described.

Determination of PEI F for APEI-MPO

For example, in APEI-MPO, a set of POs belonging to the same PF may be associated with a PEI. Specifically, if the search space ID for paging is designated as 0, one or two POs may be configured in one PF depending on the parameters configured by the BS. In this case, one PEI may provide UE group indication information for up to two POs. Additionally, if the search space ID for paging is designated as a value other than 0, one, two, or four POs may be configured in one PF depending on the parameters configured by the BS. In this case, one PEI may provide UE group indication information for up to 4 POs. As described above, all POs associated with to the same PEI may belong to the same PF, and *Offset_F* may be equally applied to all POs.

Alternatively, in APEI-MPO, it may be allowed that a set of POs belonging to multiple PFs are associated with a PEI. When one PEI is associated with POs in multiple PFs, a PEI_F may be determined/indicated based on a specific PF (hereinafter referred to as the PF_S) selected from among the multiple PFs. For example, for two (logically) consecutive PFs (e.g., a pair of a first frame corresponding to PF #2n and a second frame corresponding to PF #(2n+1) for any arbitrary integer n), the APEI-MPO method may be applied. In this case, a PF with a smaller SFN among the two PFs may be referred to as the PF_S. The PEI_F may be indicated/determined by applying *Offset_F* to the PF_S. For example, referring to FIG. 12, it is assumed that APEI-MPO is applied to two (logically) consecutive PFs, which are referred to as a first PF and a second PF. In other words, it is assumed that one PEI (or one PEI_O) is associated with the POs of the first PF and the POs of the second PF. In this scenario, the first PF having a smaller SFN among the first and second PFs may be determined as the PF_S. Thus, the PEI_F may be indicated/determined based on *Offset_S* with respect to the first PF, which is the PF_S.

Alternatively, as another method to achieve the same effect, the location of a PEI_F may be determined by applying *Offset_F* differently to each PF. For example, for two consecutive PFs, the value of *Offset_F* may be applied to the preceding PF in order, and an additional offset of 10 ms may be further applied to the subsequent PF in addition to the value of *Offset_F*, thereby aligning the position of the PEI_F.

If the APEI-MPO method is allowed for a set of POs belonging to multiple PFs, a certain range of constraints may be set as a condition for determining target PFs. For example, when a wake-up indication for POs belonging to multiple PFs is provided by one PEI, it may be defined that the multiple PFs need to be within a range of X ms. In a specific scenario where a wake-up indication for N PFs is provided by one PEI, it may be defined that the PFs need to be within the range of X ms from the position of the initial PF among target PFs. On the other hand, even when the BS is capable of configuring the number of PFs, if a set of N PFs does not satisfy the condition of X ms (i.e., if the gap between the first PF and the last PF among the N PFs exceeds the range of X ms), the BS may be configured not to indicate the value of N. In this case, the value of X may be determined based on an SSB periodicity configured by the BS, or X may be set to a fixed value (e.g., 80 or 160 ms) determined in specifications. By doing so, for multiple POs where a wake-up indication is provided by the same PEI due to the application of the APEI-MPO method, a constant gap between a PEI_O and each PO may be maintained. If these constraints are not applied, the gap between the PEI_O and each PO may vary, and for specific POs, the size of the PEI_O-to-PO gap may excessively increase, which may result in an increase in power consumption for UEs monitoring the specific POs and an increase in paging latency.

Determination of PEI O for APEI-MPO

Proposal 2 may be applied to determine a PEI_O based on a PEI_F.

Hereinafter, specific methods therefor will be described.

If the search space ID of *para_PEI_SS* has a value of 0 (i.e., SearchSpaceID = 0), the PDCCH monitoring occasion for a PEI may be determined according to the conventional method of determining a PDCCH monitoring occasion for RMSI. To determine the PDCCH monitoring occasion for RMSI, the method defined in current NR (Rel-15/16 NR) may be used, which may be found in 3GPP TS 38.213. When the above method is used and when the APEI-MPO method is applied such that one PEI includes wake-up indication information for one or more POs, it may be determined that only one PEI_O is configured in one PEI_F.

If the search space ID of *para_PEI_SS* has a value other than 0 (i.e., SearchSpaceID ≠ 0), the PEI_O may be composed of a set of S consecutive PDCCH monitoring occasions, where S may be the number of actually transmitted SSBs configured by SIB1. In addition, a K-th PDCCH monitoring occasion of the PEI_O may be configured to be related to a K-th SSB. In this case, the PDCCH monitoring occasions are sequentially numbered after assigning an index of 0 to the initial (first) PDCCH monitoring occasion in the PEI_F. The corresponding positions may be configured not to overlap with UL symbols. When the above method is used and when the APEI-MPO method is applied such that one PEI includes wake-up indication information for one or more POs,

- If *para_first_PEI* is configured, the starting position of the PDCCH monitoring occasion of the PEI_O within a PF may be determined according to *para_first_PEI*.
- If *para_first_PEI* is not configured, the starting position of the PDCCH monitoring occasion of the PEI_O within a PF may be set to the first slot.

Whether the APEI-MPO method is applied may be separately indicated to the UE through a higher layer signal (e.g., SIB or RRC signal) transmitted by the BS. Accordingly, the BS may be allowed to determine whether to apply the APEI-MPO method by considering the overhead situation of the network and the power saving gain of the UE.

Alternatively, the APEI-MPO method may be configured to always be applied to POs located in the same PF (or two consecutive PFs) without separate indications to determine the positions of a PEI_F and a PEI_O. Such a configuration may be beneficial in that there is no additional signaling overhead for specifying APEI-MPO and the UE operation for estimating the reception location of a PEI is simplified.

**Proposal 4: Configuration of PEI O in SS/PBCH block and CORESET multiplexing pattern 1**

If the search space ID for paging is 0, paging PDCCH monitoring occasions may be determined by the method of determining a PDCCH monitoring occasion for RMSI. In this case, the PDCCH monitoring occasion for RMSI may be determined based on a multiplexing pattern (hereinafter referred to as the mx-pattern) between an SS/PBCH block and a CORESET defined in 3GPP TS 38.213. If 'SS/PBCH block and CORESET multiplexing pattern 1' (hereinafter referred to as mx-pattern-1) is used as the mx-pattern, a pair of PDCCH monitoring occasions may defined in relation to each SSB index at the location of two consecutive slots. Thus, if mx-pattern-1 is used, the UE needs to perform PDCCH monitoring in two consecutive slots per PO to monitor PDCCH monitoring occasions related to a specific SSB index. This operation may not only improve the scheduling flexibility of the BS by allowing the BS to determine the transmission location of a PDCCH in consideration of cases where transmission of other signals/channels is necessary but also enhance the reliability of paging reception by allowing the UE to monitor multiple POs. However, since the UE needs to perform PDCCH monitoring twice every DRX cycle even if no paging is transmitted, the operation may be disadvantageous in terms of power saving efficiency.

In the proposed methods, information on the locations of a PF and/or a PO is used to determine the locations of a PEI_F and a PEI_O. In addition, as described above, when the search space ID of a PEI is designated as 0, the PEI may also follow the method of determining a PDCCH monitoring occasion for RMSI. Even in this case, a method of configuring the PEI_F and PEI_O needs to be defined. To determine the location of the PEI_F, the methods proposed in Proposal 1 and Proposal 3 may be applied as in other multiplexing patterns. When mx-pattern-1 described above is applied to determine the location of the PO, and/or when mx-pattern-1 is applied to determine the location of the PEI, methods for determining the location of the PEI_O are proposed. Specifically, one of the following alternatives may selected and employed.

Alt 4-1: Single PDCCH Monitoring Occasion

As one way of determining the location of a PEI_O, when mx-pattern-1 is applied to determine the location of CORESETO and when one or more of the following conditions are satisfied, one PDCCH monitoring occasion may be configured in relation to each SSB index at the location of each PEI_O.

- When the search space ID for paging has a value of 0,
- When the search space ID of the PEI has a value of 0, and
- When the BS indicates through separate signaling that only one PDCCH monitoring occasion is configured in relation to each SSB index.

The present disclosure does not restrict operations in cases where the above conditions are not satisfied, which means that even in cases other than the above conditions, only one PDCCH monitoring occasion may be configured in relation to each SSB index at the location of each PEI_O.

When this method is used and when the PEI provides a wake-up indication for paging reception, the UE may be configured to follow the paging procedure in current NR (Rel-15/16 NR). When mx-pattern-1 is applied to determine the location of CORESETO and when the search space ID for paging has a value of 0, PDCCH monitoring occasions related to each SSB index are configured in two consecutive slots at the location of a PO. In addition, the UE may monitor paging in the two slots.

Alternatively, to increase the power saving efficiency of the UE, PEI DCI may include information indicating a PDCCH monitoring occasion used for actual transmission among the two slots related to each SSB index, which are configured on the PO. When mx-pattern-1 is applied to determine the location of CORESETO and when the search space ID for paging has a value of 0, PDCCH monitoring occasions related to each SSB index are configured in two consecutive slots at the location of the PO. The location of the PDCCH monitoring occasion to be used among the two slots may be indicated to the UE through the PEI. In this case, the UE may obtain power saving benefits by omitting the blind detection (BD) operation of unnecessary paging PDCCHs based on the information provided by the PEI.

<u>Alt 4-2: Pair of PDCCH Monitoring Occasions</u>

As one way of determining the location of a PEI_O, when mx-pattern-1 is applied to determine the location of CORESETO and when one or more of the following conditions are satisfied, PDCCH monitoring occasions related to the SSB index at the location of each PEI_O may be configured by the BS. In this case, if configured by the BS, the PDCCH monitoring occasions related to the SSB index at the location of each PEI_O may be configured in two consecutive slots.

- When the search space ID for paging has a value of 0,
- When the search space ID of the PEI has a value of 0, and
- When the BS indicates through separate signaling that PDCCH monitoring occasions related to each SSB index are configured at the locations of two consecutive slots.

When this method is used and when the UE is provided with the PEI including a wake-up indication for paging reception, the UE may be configured to follow the paging procedure in current NR (Rel-15/16 NR). When mx-pattern-1 is applied to determine the location of CORESETO and when the search space ID for paging has a value of 0, PDCCH monitoring occasions related to each SSB index are configured in two consecutive slots at the location of a PO. In addition, the UE may monitor paging in the two slots.

Alternatively, to increase the power saving efficiency of the UE, PEI DCI may include information indicating a PDCCH monitoring occasion used for actual transmission among the two slots related to each SSB index, which are configured on the PO. Alternatively, information on the locations of two PDCCH monitoring occasions corresponding to each SSB index configured in the PEI may specify the PDCCH monitoring occasion used for actual transmission among the two slots related to each SSB index configured on the PO. When mx-pattern-1 is applied to determine the location of CORESETO and when the search space ID for paging has a value of 0, PDCCH monitoring occasions related to each SSB index are configured in two consecutive slots at the location of the PO. The location of the PDCCH monitoring occasion to be used among the two slots may be indicated to the UE through the PEI. In this case, the UE may obtain power saving benefits by omitting the blind detection (BD) operation of unnecessary paging PDCCHs based on the information provided by the PEI.

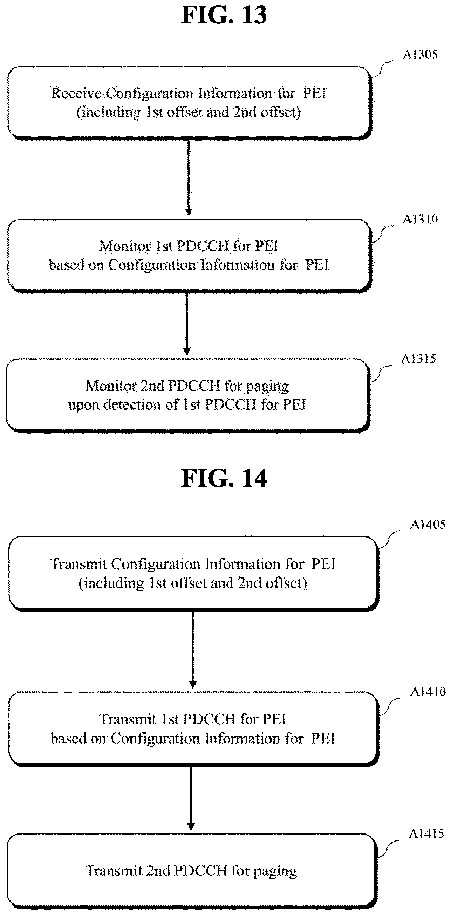

FIG. 13 is a diagram for explaining a method of receiving a signal by a UE according to an embodiment of the present disclosure.

Referring to FIG. 13, the UE may receive configuration information on a PEI (A1305).

The UE may monitor a first PDCCH for the PEI based on the configuration information regarding the PEI (A1310)

The UE may monitor a second PDCCH scheduling a paging message based on POs associated with the PEI detected as a result of monitoring the first PDCCH (A1315).

The PEI may be associated with POs of one or more PFs among periodic PFs. The UE may monitor the first PDCCH for the PEI based on first offset information and second offset information included in the configuration information regarding the PEI. The first offset information may indicate a gap between an initial PF among the one or more PFs associated with the PEI and a first frame including monitoring occasions for the first PDCCH. The second offset information may indicate a gap between an initial monitoring occasion among the monitoring occasions for the first PDCCH and a start of the first frame. A granularity of the first offset information may be at a frame level.

The configuration information regarding the PEI may be received through higher layer signaling. The higher layer signaling may be related to an SIB.

The second offset information may indicate a gap from the start of the first frame to a start of the initial monitoring occasion for the first PDCCH.

The PEI may be associated with POs of a first PF and POs of a second PF among the periodic PFs. The first PF and the second PF may be consecutive to each other.

A plurality of PFs associated with the PEI may be constrained to be consecutive to each other.

A granularity of the second offset information may be different from the granularity of the first offset information.

A granularity of the second offset information may be at a symbol level.

FIG. 14 is a diagram for explaining a method of transmitting a signal by a BS according to an embodiment of the present disclosure.

Referring to FIG. 14, the BS may transmit configuration information on a PEI (A1405).

The BS may transmit a first PDCCH for the PEI based on the configuration information regarding the PEI (A1410).

The BS may transmit a second PDCCH that schedules a paging message based on POs associated with the PEI transmitted over the first PDCCH (A1415).

The PEI may be associated with POs of one or more PFs among periodic PFs. The BS may transmit the first PDCCH for the PEI based on first offset information and second offset information included in the configuration information regarding the PEI. The first offset information may indicate a gap between an initial PF among the one or more PFs associated with the PEI and a first frame including monitoring occasions for the first PDCCH. The second offset information may indicate a gap between an initial monitoring occasion among the monitoring occasions for the first PDCCH and a start of the first frame. A granularity of the first offset information may be at a frame level.

The configuration information regarding the PEI may be transmitted through higher layer signaling. The higher layer signaling may be related to an SIB.

The second offset information may indicate a gap from the start of the first frame to a start of the initial monitoring occasion for the first PDCCH.

The PEI may be associated with POs of a first PF and POs of a second PF among the periodic PFs. The first PF and the second PF may be consecutive to each other.

A plurality of PFs associated with the PEI may be constrained to be consecutive to each other.

A granularity of the second offset information may be different from the granularity of the first offset information.

A granularity of the second offset information may be at a symbol level.

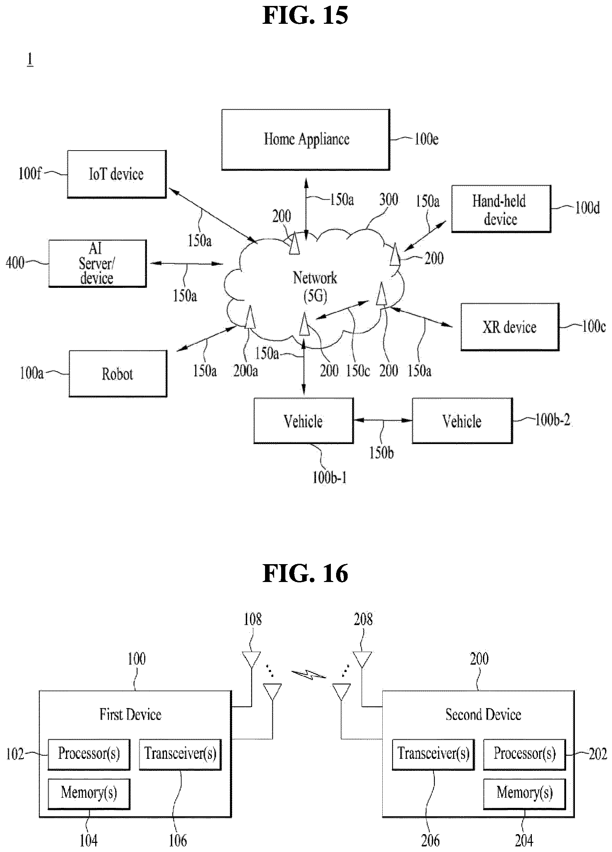

FIG. 15 illustrates a communication system 1 applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

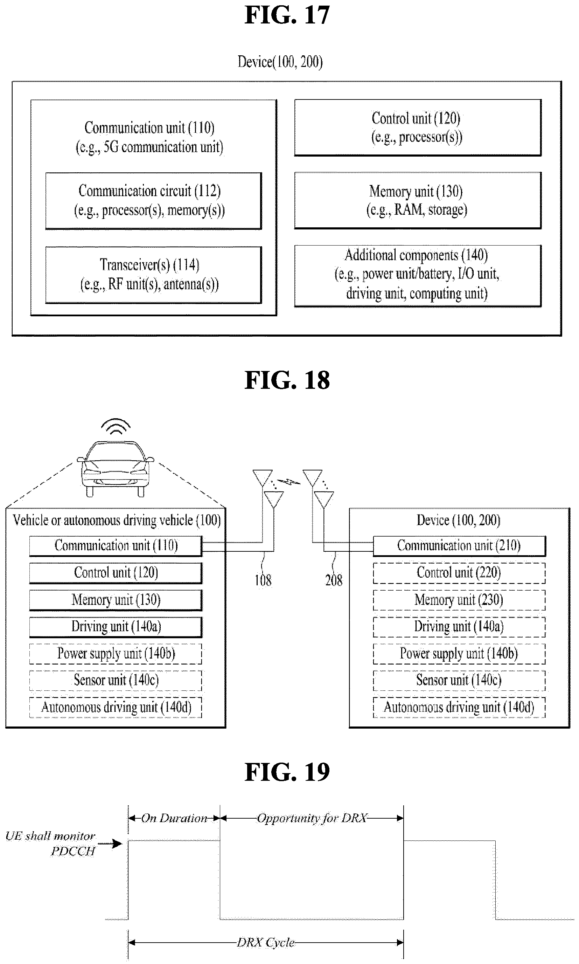

FIG. 17 illustrates another example of a wireless device applied to the present disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 19 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC _INACTIVE state, and an RRC _CONNECTED state. The UE performs DRX to receive a paging signal discontinuously in the RRC_IDLE state and the RRC _INACTIVE state. DRX in the RRC _CONNECTED state (RRC_CONNECTED DRX) will be described below.

Referring to FIG. 19, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 6 describes a DRX operation of a UE (in the RRC _CONNECTED state). Referring to Table 6, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 6]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method of receiving a signal by a user equipment (UE) in a wireless communication system, the method comprising:

   receiving configuration information regarding a paging early indication (PEI);
   monitoring a first physical downlink control channel (PDCCH) for the PEI based on the configuration information regarding the PEI; and
   monitoring a second PDCCH scheduling a paging message based on paging occasions (POs) associated with the PEI detected as a result of monitoring the first PDCCH,
   wherein the PEI is associated with POs of one or more paging frames (PFs) among periodic PFs,
   wherein the UE monitors the first PDCCH for the PEI based on first offset information and second offset information included in the configuration information regarding the PEI,
   wherein the first offset information provides a gap between an initial PF among the one or more PFs associated with the PEI and a first frame including monitoring occasions for the first PDCCH,
   wherein the second offset information provides a gap between an initial monitoring occasion among the monitoring occasions for the first PDCCH and a start of the first frame, and
   wherein a granularity of the first offset information is at a frame level.

2. The method of claim 1, wherein the configuration information regarding the PEI is received through higher layer signaling.

3. The method of claim 2, wherein the higher layer signaling is related to a system information block (SIB).

4. The method of claim 1, wherein the second offset information provides a gap from the start of the first frame to a start of the initial monitoring occasion for the first PDCCH.

5. The method of claim 1, wherein the PEI is associated with POs of a first PF and POs of a second PF among the periodic PFs, and
   wherein the first PF and the second PF are consecutive PFs.

6. The method of claim 1, wherein a plurality of PFs associated with the PEI are constrained to be consecutive to each other.

7. The method of claim 1, wherein a granularity of the second offset information is different from the granularity of the first offset information.

8. The method of claim 1, wherein a granularity of the second offset information is at a symbol level.

9. A computer-readable recording medium having recorded thereon a program for executing the method of claim 1.

10. A device for wireless communication, the device comprising:

    a memory storing instructions; and
    a processor configured to perform operations by executing the instructions,
    wherein the operations of the processor comprise:

    receiving configuration information regarding a paging early indication (PEI);

monitoring a first physical downlink control channel (PDCCH) for the PEI based on the configuration information regarding the PEI; and

monitoring a second PDCCH scheduling a paging message based on paging occasions (POs) associated with the PEI detected as a result of monitoring the first PDCCH,

wherein the PEI is associated with POs of one or more paging frames (PFs) among periodic PFs,

wherein the processor is configured to monitor the first PDCCH for the PEI based on first offset information and second offset information included in the configuration information regarding the PEI,

wherein the first offset information provides a gap between an initial PF among the one or more PFs associated with the PEI and a first frame including monitoring occasions for the first PDCCH,

wherein the second offset information provides a gap between an initial monitoring occasion among the monitoring occasions for the first PDCCH and a start of the first frame, and

wherein a granularity of the first offset information is at a frame level.

11. The device of claim 10, further comprising a transceiver configured to transmit or receive a wireless signal under control of the processor.

12. The device of claim 10, wherein the device is a user equipment (UE) operating in a wireless communication system.

13. The device of claim 10, wherein the device is an application-specific integrated circuit (ASIC) or digital signal processing device configured to control a user equipment (UE) operating in a wireless communication system.

14. A method of transmitting a signal by a base station in a wireless communication system, the method comprising:

transmitting configuration information regarding a paging early indication (PEI);

transmitting a first physical downlink control channel (PDCCH) for the PEI based on the configuration information regarding the PEI; and

transmitting a second PDCCH that schedules a paging message based on paging occasions (POs) associated with the PEI transmitted over the first PDCCH,

wherein the PEI is associated with POs of one or more paging frames (PFs) among periodic PFs,

wherein the BS transmits the first PDCCH for the PEI based on first offset information and second offset information included in the configuration information regarding the PEI,

wherein the first offset information provides a gap between an initial PF among the one or more PFs associated with the PEI and a first frame including monitoring occasions for the first PDCCH,

wherein the second offset information provides a gap between an initial monitoring occasion among the monitoring occasions for the first PDCCH and a start of the first frame, and

wherein a granularity of the first offset information is at a frame level.

15. A base station for wireless communication system, the base station comprising:

a memory storing instructions; and

a processor configured to perform operations by executing the instructions,

wherein the operations of the processor comprise:

transmitting configuration information regarding a paging early indication (PEI);

transmitting a first physical downlink control channel (PDCCH) for the PEI based on the configuration information regarding the PEI; and

transmitting a second PDCCH scheduling a paging message based on paging occasions (POs) associated with the PEI transmitted over the first PDCCH,

wherein the PEI is associated with POs of one or more paging frames (PFs) among periodic PFs,

wherein the processor is configured to transmit the first PDCCH for the PEI based on first offset information and second offset information included in the configuration information regarding the PEI,

wherein the first offset information provides a gap between an initial PF among the one or more PFs associated with the PEI and a first frame including monitoring occasions for the first PDCCH,

wherein the second offset information provides a gap between an initial monitoring occasion among the monitoring occasions for the first PDCCH and a start of the first frame, and

wherein a granularity of the first offset information is at a frame level.

# FIG. 1

| Initial Cell Search | System Information Reception | Random Access Procedure | General DL/UL Tx/Rx S18 |

PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH

S11    S12    S13    S14    S15    S16    S17
• DL/UL ACK/NACK
• UE CQI/PMI/Rank Report using PUSCH and PUCCH

# FIG. 2

One Frame (10ms)

Half-Frame (5ms) | Half-Frame (5ms)

Subframe 0 (1ms) ...... Subframe 4 (1ms) | Subframe 5 (1ms) ...... Subframe 9 (1ms)

Subframe (1ms)

15KHz | Slot (14 symbols)
1ms

30KHz | Slot 0 (14 symbols) | Slot 1
500us

60KHz | Slot 0 (14 symbols) | Slot 1 | Slot 2 | Slot 3
250us

120KHz | Slot 0 (14 symbols) | Slot 1 | Slot 2 | Slot 3 | Slot 4 | Slot 5 | Slot 6 | Slot 7
125us

# FIG. 3

Resource grid

A carrier
(up to 3300 subcarriers, i.e., 275 RBs)

A BWP

1 RB = 12 subcarriers

1 RE

1 subcarrier

1 symbol

# FIG. 4

Long PUSCH

PDCCH

Gap

PDSCH/PUSCH

Short PUCCH

Long PUSCH

One slot

f

t

# FIG. 5

# FIG. 6

DL assingment-to-PDSCH offset (K0)

PDCCH

slot

PDSCH

PUCCH

PDSCH-to-HARQ-ACK reporting offset (K1)

# FIG. 7

UL grant-to-PUSCH offset (K2)

PDCCH

PUSCH

# FIG. 8

WUS duration

WUS

PO

Configured maximum
WUS duration

Gap

power

time

# FIG. 9

Transmit Configuration Information for PEI — FC101

Transmit PEI
(Information regarding PEI_F / PEI_0) — FC102

Transmit Paging PDCCH/PDSCH — FC103

# FIG. 10

Receive Configuration Information for PEI — FC201

Receive PEI
(Information regarding PEI_F / PEI_0) — FC202

Receive Paging PDCCH/PDSCH — FC203

# FIG. 11

$T = 32\ frames$
$N = 4\ PFs$
$PF\_offset = 7$
$T\ div\ N = 8$

$UE\_ID\ mod\ N = 1, 2, 3\ or\ 0$

(SFN 1+ PF_offset 7) mod 32= 8

(SFN 9+ PF_offset 7) mod 32= 16

(SFN 17+ PF_offset 7) mod 32 = 24

(SFN 25+ PF_offset 7) mod 32= 0

SFN 0 1 2 3 4 5 6 7 8 9 10 11 12 13 14 15 16 17 18 19 20 21 22 23 24 25 26 27 28 29 30 31

PF    PF    PF    PF

PO  PO  .....  PO

Ns POs

1 DRX cycle

EP 4 319 351 A1

# FIG. 12

EP 4 319 351 A1

# FIG. 13

Receive Configuration Information for PEI
(including 1st offset and 2nd offset) — A1305

Monitor 1st PDCCH for PEI
based on Configuration Information for PEI — A1310

Monitor 2nd PDCCH for paging
upon detection of 1st PDCCH for PEI — A1315

# FIG. 14

Transmit Configuration Information for PEI
(including 1st offset and 2nd offset) — A1405

Transmit 1st PDCCH for PEI
based on Configuration Information for PEI — A1410

Transmit 2nd PDCCH for paging — A1415

# FIG. 15

# FIG. 16

EP 4 319 351 A1

# FIG. 17

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 18

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

# FIG. 19

On Duration — Opportunity for DRX

UE shall monitor PDCCH

DRX Cycle

35

| INTERNATIONAL SEARCH REPORT | International application No. |
|---|---|
| | **PCT/KR2022/011352** |

**A.     CLASSIFICATION OF SUBJECT MATTER**

**H04W 68/00**(2009.01)i; **H04W 68/02**(2009.01)i; **H04W 52/02**(2009.01)i; **H04W 76/28**(2018.01)i

According to International Patent Classification (IPC) or to both national classification and IPC

**B.     FIELDS SEARCHED**

Minimum documentation searched (classification system followed by classification symbols)

H04W 68/00(2009.01); H04L 5/00(2006.01); H04W 16/28(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PEI 설정 정보(PEI configuration information), PDCCH 모니터링(PDCCH monitoring), PO, PF, 오프셋(offset), 입도(granularity)

**C.     DOCUMENTS CONSIDERED TO BE RELEVANT**

| Category* | Citation of document, with indication, where appropriate, of the relevant passages | Relevant to claim No. |
|---|---|---|
| A | US 2012-0122495 A1 (WENG, Jianfeng et al.) 17 May 2012 (2012-05-17) See paragraphs [0266]-[0271]; claim 1; and figure 15. | 1-15 |
| A | CN 113056951 A (BEIJING XIAOMI MOBILE SOFTWARE CO., LTD.) 29 June 2021 (2021-06-29) See abstract; and claim 1. | 1-15 |
| A | ERICSSON. Extended PO and early termination for paging monitoring. R2-1912644, 3GPP TSG RAN WG2 #107bis. Chongqing, China. 03 October 2019. See pages 1-5. | 1-15 |
| A | US 2021-0153162 A1 (CHEN, Tao et al.) 20 May 2021 (2021-05-20) See paragraphs [0146]-[0154]; and figure 26. | 1-15 |
| A | WO 2020-216242 A1 (MEDIATEK INC.) 29 October 2020 (2020-10-29) See paragraphs [0058]-[0060]; and figure 10. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2022** | **18 November 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/011352**

| Patent document cited in search report | | | Publication date (day/month/year) | Patent family member(s) | | | Publication date (day/month/year) |
|---|---|---|---|---|---|---|---|
| US | 2012-0122495 | A1 | 17 May 2012 | US | 8897818 | B2 | 25 November 2014 |
| CN | 113056951 | A | 29 June 2021 | None | | | |
| US | 2021-0153162 | A1 | 20 May 2021 | CN | 110226351 | A | 10 September 2019 |
| | | | | CN | 110226351 | B | 01 April 2022 |
| | | | | TW | 202010338 | A | 01 March 2020 |
| | | | | TW | I702868 | B | 21 August 2020 |
| | | | | WO | 2019-028849 | A1 | 14 February 2019 |
| | | | | WO | 2019-029711 | A1 | 14 February 2019 |
| WO | 2020-216242 | A1 | 29 October 2020 | CN | 112136349 | A | 25 December 2020 |
| | | | | TW | 202046786 | A | 16 December 2020 |
| | | | | TW | I753411 | B | 21 January 2022 |
| | | | | US | 2022-0070783 | A1 | 03 March 2022 |

Form PCT/ISA/210 (patent family annex) (July 2022)